# EUROPÄISCHE PATENTSCHRIFT

(11) **EP 2 427 666 B1**
(45) Veröffentlichungstag und Bekanntmachung des Hinweises auf die Patenterteilung: **12.07.2017**
(21) Anmeldenummer: 10722591.4
(22) Anmeldetag: 06.05.2010
(51) Int. Cl.: F16C 33/64

(54) **GROSSWÄLZLAGER**
LARGE ROLLER BEARING
PALIER A ROULEMENT LARGE

(30) Priorität: 06.05.2009 EP 09006156
(43) Veröffentlichungstag der Anmeldung: 14.03.2012
(60) Teilanmeldung: 17173907.1
(73) Patentinhaber: Aktiebolaget SKF, 415 50 Göteborg (SE)
(72) Erfinder: LIANG, Baozhu, 97456 Dittelbrunn (DE); MAY, Ulrike, 97469 Gochsheim (DE); WAGNER, Gerhard, 97357 Prichsenstadt (DE); RUMPEL, Claus, 97440 Werneck (DE)
(74) Vertreter: Schonecke, Mitja
(86) Internationale Anmeldenummer: PCT/EP2010/002790
(87) Internationale Veröffentlichungsnummer: WO 2010/127860

(56) Entgegenhaltungen:
- DE-C1- 10 228 333
- JP-A- 2003 193 139
- JP-A- 2007 297 676
- JP-A- 2007 327 112
- US-A1- 2009 052 823
- 'THYROFORT® C 55 E / C 55 R', [Online] 21 November 2003, Gefunden im Internet: <URL:http://dew.edelstahl-e.com/upload/bina rydata_ewkinterd4cms/1192/thyrofort_1203_d. pdf> [gefunden am 2013-11-11]

## Beschreibung

Die vorliegende Erfindung betrifft ein Großwälzlager.

Bei heute bekannten Großwälzlagern werden die Laufbahnelemente im Allgemeinen aus einsatz- oder durchgehärtetem Stahl gefertigt. Bei der Verwendung von Einsatzstahl wird der an sich niedrig legierte Stahl in einer Kohlenstoffatmosphäre in einer Randschicht aufgekohlt, sodass diese nachträglich gehärtet werden kann. Für Großwälzlager ist es aufgrund der ständigen Belastung durch die umlaufenden Wälzkörper auf den Laufbahnelementen erforderlich, eine hohe Oberflächenhärte im Bereich der Laufbahnen zu erzielen, um eine lange Lebensdauer gewährleisten zu können. Das Einsatz- oder Durchhärten der Laufbahnelemente ist jedoch mit einem relativ hohen Energieverbrauch verbunden.

Bei Schwenklagern ist es hingegen bekannt, gehärtete Randschichten mittels induktiver Verfahren zu erzeugen. Bei derartigen Lagern sind jedoch die Anforderungen an die Oberflächenhärte aufgrund der andersartigen Belastung durch die Wälzkörper nicht so hoch wie bei Großwälzlagern. Klassischerweise werden bei Schwenklagern andere Stahlsorten angesetzt als bei Großwälzlagern. Insofern lassen sich die bei diesen Lagerarten bekannten induktiven Härteverfahren nicht auf die Herstellung von Großwälzlagern übertragen.

Ebenfalls ist es bei kleineren Wälzlagerdurchmessern bekannt, induktives Randschichthärten bei den dort verwendeten Stahlsorten, wie zum Beispiel 100Cr6 anzuwenden. Auch hier lassen sich die bekannten Verfahren zum induktiven Härten der Randschichten unter wirtschaftlichen Gesichtspunkten nicht auf Großwälzlager übertragen.

Ferner sind aus der US 2009/052823 A1 und der JP 2003 193139 A Fahrzeugradlager mit gehärteten Laufbahnen bekannt.

Es ist Aufgabe der vorliegenden Erfindung eine Großwälzlageranordnung bereitzustellen, bei der eine hohe Lebensdauer bei gleichzeitig einfacher Herstellung gewährleistet ist.

Diese Aufgabe wird durch eine Großwälzlageranordnung mit den Merkmalen des Patentanspruchs 1 sowie durch ein Verfahren gemäß Anspruch 6 gelöst. Vorteilhafte Ausgestaltungen sind Gegenstand der abhängigen Unteranspnüche.

Im Gegensatz zur kostspieligen Verwendung von Einsatzstahl, der außerhalb der Oberflächenschicht grundsätzlich einen Anteil von weniger als 0,2 Masse% Kohlenstoff aufweist und nur durch aufwändige Aufkohlung in der Randschicht auf einen Gehalt von beispielsweise 0,8 Masse% Kohlenstoff in dieser Schicht für den Einsatz in hoch belasteten Wälzlagern ausreichend härtbar wird, lässt sich hier ein kostengünstigerer, so geilannter Vergütungsstahl mit einer Beimischung von Wälzlagerelements durch ein induktives Verfahren nachträglich gehärtet ist. Dieses Härtungsverfahren ist im Vergleich zur Aufkohlung der Randschicht mit einem deutlich reduzierten Aufwand verbunden. Als Wälzlagerelemente gemäß der Erfindung können insbesondere die Laufbahnelemente und/oder die Wälzkörper des Großlagers ausgebildet sein. Insbesondere die durch Wälzkontakt belasteten Elemente des Großlagers profitieren durch die erfindungsgemäße Ausgestaltung. Das Wälzlagergegenelement ist insofern das mit dem Wälzlagerelement in Wälzkontakt stehende Wälzlagerelement und ist bevorzugt ebenfalls gemäß der Erfindung ausgebildet. Das Großwälzlager weist bevorzugt einen Durchmesser von mindestens 250 mm auf.

Die Erfindung basiert dabei wesentlich auf der Erkenntnis, dass bei geringeren Kohlenstoffanteilen als 0,46 Masse% die induktive Härtung der Oberflächenschichten keine ausreichende Oberflächenhärte mit einer ausreichend stabilen Gefügestruktur zur Gewährleistung einer ausreichend langen Lebensdauer des Laufbahnelements erreicht. Insbesondere kann bei geringerem Kohlenstoffgehalt in der Randschicht beim induktiven Härten ein nachteilig instabiles Gefüge entstehen, das zu einem frühzeitigen Ausfall des Wälzlagerelements und somit des Großwälzlagers führt. Hinzu kommt, dass insbesondere bei Großwälzlagern bei der Wärmebehandlung ein nicht mehr vernachlässigbarer Verzug des Materials auftritt, so dass eine hohe Laufgenauigkeit auf den Laufbahnen für die Wälzkörper nicht mehr gewährleistet ist. Der Verzug ist nach der Wärmebehandlung wieder durch weitere, beispielsweise spanende Bearbeitung zu entfernen, was die Produktionskosten für entsprechende Laufbahnelemente weiter in die Höhe treibt. Auch nach der spanenden Bearbeitung, also der Entfernung von Material auf der Oberfläche ist jedoch sicherzustellen, dass die maximale Härte der Oberfläche der je nach der zu erwartenden Belastung gewählten Auslegung des Großlagers entspricht, so dass die erforderliche Tragfähigkeit gegeben ist. Insofern ist die Dicke der Oberflächenschicht insbesondere bei hoch belasteten Großlagern größer zu wählen als bei kleineren Lagerdimensionen.

In einer bevorzugten Ausführungsform der Erfindung weist die Oberflächenschicht eine maximale Härte auf, die geringer ist als die maximal erreichbare Härte des verwendeten Stahls. Mit dem verwendeten Stahl lässt sich grundsätzlich eine deutlich höhere Härte erzielen als mit den zum Einsatz in Großlagern bekannten Stählen, wie beispielsweise 42CrMo4. Allerdings wird dieser Vorteil bevorzugt nicht eingesetzt und lediglich eine Härte durch das induktive Härteverfahren erzeugt, die der bei bekannten Wälzlagerelementen aus 42CrMo4 für Großlager entspricht. Dadurch wird der erfindungsgemäß verwendete Stahl beim Härten nicht bis an seine werkstofflichen Grenzen gebracht, wie dies oftmals beim Einsatz von 42CrMo4 der Fall ist. Dadurch ergibt sich zwar eine zu bekannten Großlagern vergleichbare maximale Härte in der Oberflächenschicht, jedoch ein anderer Härteverlauf mit zunehmender Tiefe. Während bei bekannten Stahlsorten für Großlager die Härte nach einer vergleichsweise dünnen Randschicht stark abfällt und schnell in die Härte des nicht gehärteten Bereichs übergeht, wird bei dem erfindungsgemäß verwendeten Stahl ein deutlich flacherer Übergang erzielt. Folglich reicht die gehärtete Oberflächeschicht bei geringer werdender Härte deutlich tiefer in das Wälzlagerelement hinein als bei bekannten Großlagern. Gleichzeitig wird dadurch auch eine relativ feine und stabile Gefügestruktur hergestellt. Dies resultiert einerseits in einer deutlich erhöhten Lebensdauer der Großlager. Andererseits ist bei Einsatz des an sich höher härtbaren Stahls mit mehr als 0,46 Masse% an Kohlenstoff ein deutlich einfacherer und materialschonenderer Prozess zur Erreichung der erforderlichen Härte notwendig, so dass der Stahl weniger belastet wird. Dies kann beispielsweise darin liegen, dass der Stahl weniger hoch erwärmt werden muss und weniger schnell abgeschreckt wird, um den gewünschten flachen Härteverlauf zu zeigen.

Dabei ist in vorteilhaften Ausführungen der Erfindung zu beachten, dass die Tragfähigkeit der gehärteten Schicht und damit deren Tiefe den durch den Hertzschen Kontakt mit den Wälzlagergegenelementen erzeugten Spannungsverlauf überdeckt. Die Spannung nimmt mit zunehmender Tiefe ab. Folglich muss die Dicke der gehärteten Schicht auf die zu erwartende Belastung des Lagers abgestimmt werden, was dadurch erfolgt, dass bei höheren zu erwartenden Belastungen, also einem sich tiefer auswirkenden Spannungsverlauf dickere Randschichten erzeugt werden, als bei geringeren Belastungen.

In einer vorteilhaften Ausgestaltung der Erfindung weist der Stahl Beimischungen von Mangan und/oder Chrom auf. Insbesondere Beimischungen dieser Legierungselemente stellen einen Stahl bereit, der sich induktiv gut härten lässt, und eine ausreichende Härtetiefe, sowie ein geeignetes Gefüge für hohe Tragfähigkeit und lange Lebensdauer des Laufbahnelements bereitstellt. Insbesondere vorteilhaft ist es, wenn der Stahl eine Beimischung von Molybdän von mindestens 0,12 Masse% aufweist. Die vorteilhafte Härtbarkeit lässt sich ab einem Molybdän-Gehalt von 0,35 Masse% nicht mehr steigern, weshalb die Beimischung bevorzugt im Bereich von 0,12 bis 0,35 Masse% liegt.

In einer vorteilhaften Ausgestaltung der Erfindung weist die gehärtete Oberflächenschicht eine maximale Härte von mindestens 58 HRC auf. Insbesondere ab dieser Oberflächenhärte weist das Laufbahnelement eine ausreichend stabile Laufbahn auf, um eine lange Lebensdauer zu gewährleisten.

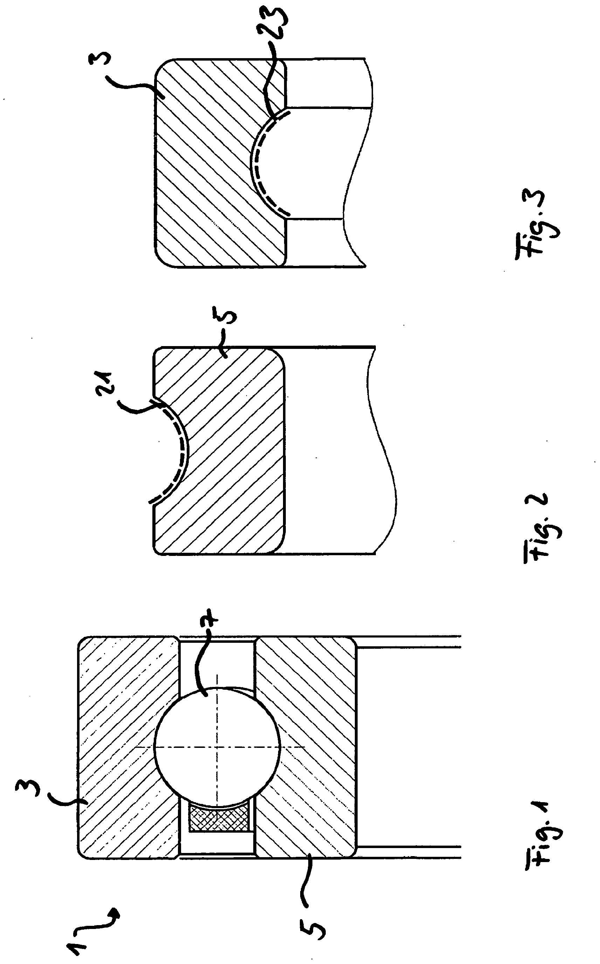

Weitere Vorteile und Ausgestaltungen der Erfindung ergeben sich aus dem nachfolgend beschriebenen Ausführungsbeispiel im Zusammenhang mit den beigefügten Figuren. Dabei zeigen die Figuren 1 bis 3 verschiedene Ansichten und Bauteile des Ausführungsbeispiels der Erfindung.

Gemäß einem Ausführungsbeispiel der Erfindung wird in der Figur 1 ein Großwälzlager 1 mit einem Durchmesser von mindestens 250 mm beschrieben. Das Großwälzlager umfasst zwei Laufbahnelemente, die als Außenring 3 und als Innenring 5 ausgeführt sind. Zwischen den Laufbahnelementen sind als Kugeln 7 ausgeführte Wälzkörper angeordnet. Bei Bewegung der zwei Laufbahnelemente kommt es zu einer abrollenden Bewegung der Kugeln 7 auf den Laufbahnelementen. Das Großwälzlager wird typischerweise in Einbausituationen angewendet, bei denen eine fortwährende umlaufende Rotation des Außenrings 3 im Vergleich zum Innenring 5 erfolgt oder umgekehrt. Dies kann beispielsweise in einer Windkraftanlage der Fall sein.

In der Figur 2 ist ausschnittsweise der Innenring 5 dargestellt. Er weist eine Laufbahn 21 auf, auf der die Kugeln 7 im Betrieb des Großwälzlagers 1 abrollen. Die Laufbahn 21 weist eine gehärtete Oberflächenschicht auf, die den Belastungen durch den Kontakt mit den Kugeln 7 widerstehen kann und eine lange Lebensdauer des Großwälzlagers gewährleistet. Gleiches gilt für den in der Figur 3 dargestellten Außenring 3, der eine ebenfalls oberflächlich gehärtete Laufbahn 23 aufweist.

Die Oberflächen der Laufbahnen 21 und 23 sind durch den abrollenden Kontakt mit den Wälzkörpern stets belastet. Die Lagerringe bestehen aus einem Stahl, der eine Beimischung von Kohlenstoff von 0,46 bis 1,0 Masse % und eine Beimischung von Molybdän von 0,12 bis 0,35 Masse% aufweist. Weitere Beimischungen sind bevorzugt Mangan zwischen 0,5 und 1,0 Masse% und/oder Chrom zwischen 0,9 und 1,5 Masse%. Entsprechende Materialien sind an sich bekannt, ihr Einsatz zur Herstellung von Laufbahnelementen mit entsprechender induktiver Härtung der Oberflächenschicht stellt im Vergleich zu bekannten Laufbahnelementen für Großwälzlager eine kostengünstigere und damit einfachere Herstellungsmethode bereit. Der Stahl kann beispielsweise der Spezifikation 50CrMo4 entsprechen, während bei bekannten Großlagern hauptsächlich 42CrMo4 eingesetzt wird.

Die Laufbahnen der Lagerringe sind nach Formgebung derselben durch ein induktives Verfahren gehärtet. Beispielsweise wird ein Induktor nahe über die Laufbahn geführt, wodurch diese erwärmt wird. Es kommt zu einer Phasenumwandlung, wobei insbesondere härteres Material gebildet wird. Mittels einer nachfolgenden Brause wird das erwärmte Material abgeschreckt, so dass die härtere Struktur erhalten bleibt. Dieses induktive Härteverfahren wird nach bekannten Verfahren bevorzugt schlupflos ausgeführt, so dass keine nicht gehärtete Zone auf der Laufbahn besteht. Die Laufbahn weist entlang des ganzen Laufbahnelements somit im Rahmen fertigungstechnischer Toleranzen dieselbe Härte auf.

Die maximale Härte der Oberflächenschicht beträgt mindestens 58 HRC. Diese Härte lässt sich auch bei zum Einsatz in Lagern bekannten Stahlsorten erreichen. Allerdings sind diese Stahlsorten zur Erreichung dieser Mindesthärte bis an die Grenzen ihrer werkstoffspezifischen Eigenschaften zu härten. Mit dem hier verwendeten Stahl ließe sich grundsätzlich eine deutlich höhere maximale Härte der Oberflächenschicht als 58 HRC erreichen. Diese Härte ist jedoch bei den meisten Anwendungen für Großlager nicht erforderlich. Insofern ist der Stahl zur Erreichung der Härte von 58 HRC bezüglich seiner werkstofflichen Möglichkeiten deutlich weniger ausgereizt als zu diesem Einsatzzweck bekannten Stahlsorten. Insofern ist zur Erreichung der gewünschten maximalen Härte ein im Vergleich zu bekannten angewendeten Herstellungsverfahren für Bauteile von Großlagern ein deutlich materialschonenderes Verfahren der Härtung möglich. So ist die maximale Temperatur beim Härten geringer und auch das Abschrecken kann mit geringeren Temperaturgradienten erfolgen, wodurch zudem ein flacherer Übergang der Härte zwischen der Oberflächenschicht und dem Grundgefüge entsteht. Der materialschonende Prozess führt insbesondere zu einer besseren Reproduzierbarkeit der Ergebnisse.

Das induktive Härtungsverfahren ist derart ausgeführt, dass die Tiefe der gehärteten Schicht den Anforderungen-an die Lebensdauer des Lagers entspricht. Insbesondere ist die Tiefe der gehärteten Schicht derart gewählt, dass ein durch den Hertzschen Kontakt mit den Wälzkörpern erzeugter Spannungsverlauf überdeckt wird. Die gehärtet Schicht reicht also tiefer in das Material als die durch den Wälzkontakt erzeugte Spannung die Belastbarkeit des nicht gehärteten Grundmaterials übersteigt. Daher sind Überbelastungen des Grundmaterials ausgeschlossen, die erhöhte Spannung und Belastung wird durch Oberflächenschicht aufgenommen. Daraus resultiert eine hohe Lebensdauer des Großlagers. Zudem weist die Oberflächenschicht ein geeignetes Gefüge für eine hohe Tragfähigkeit des Lagers auf.

In einem weiteren Ausführungsbeispiel der Erfindung sind neben den Laufbahnelementen auch die Wälzkörper gemäß der Erfindung ausgeführt, sind also mittels eines induktiven Verfahrens gehärtet und bestehen aus einem entsprechenden Stahl. Alternativ ist auch ein Ausführungsbeispiel der Erfindung möglich, bei dem lediglich die Wälzkörper gemäß der Erfindung ausgebildet sind, nicht jedoch die Laufbahnelemente. Die Erfindung lässt sich folglich bei allem durch den Wälzkontakt belasteten Bestandteilen eines Wälzlagers vorteilhaft einsetzen. Zudem ist die Erfindung nicht auf Wälzlager mit Kugeln als Wälzkörper beschränkt, sondern grundsätzlich auf alle Typen von Großwälzlagern anwendbar.

### Bezugszeichenliste

- 1: Großwälzlager
- 3: Außenring
- 5: Innenring
- 7: Kugel
- 21, 23: Laufbahn

## Patentansprüche

1. Großwälzlageranordnung (1) mit einem Außendurchmesser von mindestens 250 mm und mindestens einem Laufbahnelement (3, 5) und mindestens einem Wälzkörper (7), die folgende Merkmale aufweist:
- wenigstens eine Kontaktzone (21, 23) zwischen dem mindestens einen Laufbahnelement (3, 5) und dem mindestens einen Wälzkörper (7)
- die Kontaktzone weist eine induktiv gehärtete Oberflächenschicht auf,
- das Laufbahnelement (3, 5) und/oder der mindestens eine Wälzkörper (7) besteht aus einem Stahl, der eine Beimischung von Kohlenstoff von mindestens 0,46 Masse% aufweist,
- wobei der Stahl eine Beimischung von Molybdän aufweist,
- die Oberflächenschicht weist eine durch ein induktives Härtverfahren erzeugte, maximale Härte auf, die geringer als die maximal erreichbare Härte des verwendeten Stahls ist.

2. Großwälzlageranordnung nach Anspruch 1, wobei die gehärtete Oberflächenschicht (21, 23) eine maximale Härte von mindestens 58 HRC aufweist.

3. Großwälzlageranordnung nach Anspruch 1 oder 2, wobei der Stahl eine Beimischung von Mangan und/oder Chrom aufweist.

4. Großwälzlageranordnung nach Anspruch 1, 2 oder 3, wobei die Beimischung von Molybdän mindestens 0,12 Masse% beträgt.

5. Großwälzlageranordnung nach einem der vorherigen Ansprüche, wobei eine Tiefe der induktiv gehärteten Oberflächenschicht auf einen Spannungsverlaur, der von einem Hertzschen Kontakt zwischen Laufbahnelement (3, 5) und Wälzkörper (7) erzeugt ist, abgestimmt ist.

6. Verfahren zur Herstellung einer Großwälzlageranordnung (1) mit einem Außendurchmesser von mindestens 250 mm und mindestens einem Laufbahnelement (3, 5), mit folgenden Merkmalen:
- Auswahl eines Stahls, der eine Beimischung von Kohlenstoff von mindestens 0,46 Masse% aufweist;
- wobei der Stahl eine Beimischung von Molybdän aufweist;
- Formen einer Kontaktzone für ein Wälzlagergegenelement;
- Induktives Härten der Oberflächenschicht der Kontaktzone, sodass die Oberflächenschicht (21, 23) durch das induktive Härten eine maximale Härte aufweist, die geringer als die maximal erreichbare Härte des verwendeten Stahls ist.

## Claims

1. Large roller bearing arrangement (1) with an outer diameter of at least 250 mm and at least one raceway element (3, 5) and at least one rolling element (7), which arrangement has the following features:
- at least one contact zone (21, 23) between the at least one raceway element (3, 5) and the at least one rolling element (7)
- the contact zone has an inductively hardened surface layer,
- the raceway element (3, 5) and/or the at least one rolling element (7) is made of a steel with an addition of carbon of at least 0.46% by mass,
- wherein the steel has an addition of molybdenum,
- the surface layer has a maximum hardness, generated by an inductive hardening process, which is lower than the maximum achievable hardness of the steel used.

2. Large roller bearing arrangement according to Claim 1, wherein the hardened surface layer (21, 23) has a maximum hardness of at least 58 HRC.

3. Large roller bearing arrangement according to Claim 1 or 2, wherein the steel has an addition of manganese and/or chromium.

4. Large roller bearing arrangement according to Claim 1, 2 or 3, wherein the addition of molybdenum is at least 0.12% by mass.

5. Large roller bearing arrangement according to one of the preceding claims, wherein a depth of the inductively hardened surface layer is determined on a voltage profile which is generated by Hertzian contact between the raceway element (3, 5) and the rolling element (7).

6. Method for producing a large roller bearing arrangement (1) with an outer diameter of at least 250 mm and at least one raceway element (3, 5) having the following features:
- choice of a steel having an addition of carbon of at least 0.46% by mass,
- wherein the steel has an addition of molybdenum,
- formation of a contact zone for a roller bearing counter element,
- inductive hardening of the surface layer of the contact zone, such that, by virtue of the inductive hardening process, the surface layer (21, 23) has a maximum hardness which is lower than the maximum achievable hardness of the steel used.

## Revendications

1. Palier à roulement large (1) avec un diamètre extérieur d'au moins 250 mm et au moins un élément de piste de roulement (3, 5) et au moins un corps de roulement (7), et qui présente les caractéristiques suivantes:
- au moins une zone de contact (21, 23) entre ledit au moins un élément de piste de roulement (3, 5) et ledit au moins un corps de roulement (7),
- la zone de contact présente une couche de surface durcie par induction,
- l'élément de piste de roulement (3, 5) et/ou ledit au moins un corps de roulement (7) se compose d'un acier, qui présente un ajout de carbone d'au moins 0,46 % en masse,
- dans lequel l'acier présente un ajout de molybdène,
- la couche de surface présente une dureté maximale produite par un procédé de durcissement par induction, qui est inférieure à la dureté maximale réalisable de l'acier utilisé.

2. Palier à roulement large selon la revendication 1, dans lequel la couche de surface durcie (21, 23) présente une dureté maximale d'au moins 58 HRC.

3. Palier à roulement large selon la revendication 1 ou 2, dans lequel l'acier présente un ajout de manganèse et/ou de chrome.

4. Palier à roulement large selon la revendication 1, 2 ou 3, dans lequel l'ajout de molybdène vaut au moins 0,12 % en masse.

5. Palier à roulement large selon l'une quelconque des revendications précédentes, dans lequel une profondeur de la couche de surface durcie par induction est accordée à un profil de contrainte, qui est produit par un contact de Hertz entre l'élément de piste de roulement (3, 5) et un corps de roulement (7).

6. Procédé de fabrication d'un palier à roulement large (1) avec un diamètre extérieur d'au moins 250 mm et au moins un élément de piste de roulement (3, 5), avec les caractéristiques suivantes:
- choix d'un acier, qui présente un ajout de carbone d'au moins 0,46 % en masse;
- dans lequel l'acier présente un ajout de molybdène;
- formation d'une zone de contact pour un contre-élément de palier à roulement;
- durcissement par induction de la couche de surface de la zone de contact, de telle manière que la couche de surface (21, 23) présente par le durcissement par induction une dureté maximale, qui est inférieure à la dureté maximale réalisable de l'acier utilisé.
